(19) Europäisches Patentamt
European Patent Office
Office européen des brevets

(11) Numéro de publication: 0 379 819 A1

(12) **DEMANDE DE BREVET EUROPEEN**

(21) Numéro de dépôt: **89403576.5**

(22) Date de dépôt: **20.12.89**

(51) Int. Cl.5: **C08G 77/62, C08J 3/24, C04B 35/00**

(30) Priorité: **23.12.88 FR 8817070**

(43) Date de publication de la demande: **01.08.90 Bulletin 90/31**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Lebrun, Jean-Jacques Centre Hospitalier de**
**Lyon Sud Chemin du Grand Revoyet**
**F-69310 Pierre Bénite(FR)**
Inventeur: **Bobichon, Charles**
**1, rue de l'Angile**
**F-69005 Lyon(FR)**
Inventeur: **Balme, Maurice**
**23, Avenue du 11 Novembre**
**F-69110 Sainte Foy les Lyon(FR)**

(74) Mandataire: **Esson, Jean-Pierre et al**
**RHONE-POULENC CHIMIE Service Brevets Chimie 25, quai Paul Doumer**
**F-92408 Courbevoie Cedex(FR)**

# (54) Procédé pour la réticulation de polysilazanes.

(57) L'invention a trait à un procédé pour la réticulation de polysilazanes qui est caractérisé par le fait qu'il consiste à mettre en contact lesdits polysilazanes avec une quantité efficace d'au moins un composé choisi parmi (i) les composés de formule

$$X-\overset{O}{\overset{\|}{C}}-X$$

et (ii) les composés comprenant au moins deux groupements fonctionnels de formule

$$X-\overset{O}{\overset{\|}{C}}-,$$

formules dans lesquelles X représente un halogène, de préférence le chlore.

Les polysilazanes ainsi réticulés peuvent alors servir à la préparation de produits céramiques à base de SiC et/ou $Si_3N_4$.

EP 0 379 819 A1

## PROCEDE POUR LA RETICULATION DE POLYSILAZANES

La présente invention a trait à un procédé de réticulation de polysilazanes.

Elle concerne également, à titre d'application, l'utilisation des polysilazanes ainsi réticulés pour la préparation de matériaux céramiques à base de carbure et/ou nitrure de silicium.

L'idée de préparer des produits céramiques, chargés ou non, à base de carbure et/ou nitrure de silicium par décomposition thermique de composés précurseurs du type polysilazane, notamment organopolysilazane ou organopoly(disilyl) silazane, n'est pas nouvelle et, à ce jour, de nombreux articles et brevets ont été publiés sur le sujet.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

L'intérêt d'une telle voie polymère réside surtout dans les possibilités de mise en forme de ce type de produits, et plus particulièrement pour l'obtention, après pyrolyse, d'articles céramiques en $Si_3N_4$, SiC, SiNC, ou leurs mélanges, sous forme de fibres ou de revêtements plus ou moins minces.

En fait, la mise en oeuvre des polysilazanes sous la forme de fibres constitue probablement un de leurs avantages principaux.

Selon un schéma désormais classique, des polysilazanes (après ramollissement éventuel s'ils sont initialement à l'état solide) sont filés en fibres continues par tout moyen connu en soi, notamment par extrusion à travers des filières, ces fibres sont ensuite traitées dans le but notamment d'améliorer leur tenue thermique et/ou mécanique, puis pyrolysées pour donner finalement les fibres en céramique désirées.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques par une voie polymères silazanes.

A ce jour, le durcissement des fibres polysilazanes fait appel soit à des méthodes physiques (irradiations) soit à des méthodes thermochimiques.

Les méthodes physiques présentent l'inconvénient majeur d'être de mise en oeuvre délicate et onéreuse, et la seule voie retenue actuellement industriellement est le durcissement thermochimique au moyen d'un traitement sous un mélange air/vapeurs d'eau.

Cependant, un tel traitement a pour inconvénient sérieux d'introduire des quantités importantes d'oxygène dans la fibre céramique, ce qui peut se traduire par une altération sensible des performances d'ensemble de ladite fibre, notamment de certaines de ses propriétés thermomécaniques comme par exemple sa résistance à la rupture.

La présente invention a donc pour but de résoudre le problème ci-dessus et de proposer un moyen de traitement chimique simple, efficace, économique et de mise en oeuvre aisée qui, en obviant aux inconvénients des procédés de l'art antérieur, permette d'aboutir sous des formes les plus diverses (fils, fibres, pellicules, revêtements, pièces massives, etc...) à des polysilazanes substantiellement infusibles qui, lors de leur pyrolyse, donnent avec de bons rendements pondéraux des produits céramiques à base de $Si_3N_4$ et/ou SiC présentant d'excellentes propriétés.

On a maintenant trouvé que ce but, et d'autres, peuvent être atteints au moyen de la présente invention qui concerne en effet un procédé de réticulation de polysilazanes, et qui est caractérisé par le fait qu'il consiste à mettre en contact lesdits polysilazanes avec une quantité efficace d'au moins un composé choisi parmi (i) les composés de formule

$X-\overset{\overset{O}{\|}}{C}-X$ et (ii) les composés comprenant au moins deux groupements fonctionnels de formule

$X-\overset{\overset{O}{\|}}{C}-$, formules dans lesquelles X représente un halogène.

La Demanderesse a pu constater que, de façon totalement inattendue et surprenante, un tel traitement, dont les modalités pratiques de mise en oeuvre seront définies plus en détails ci-après permet d'aboutir à des polysilazanes présentant une structure particulièrement réticulée qui leur confère de bonnes propriétés d'infusibilité et d'insolubilité.

Mais d'autres caractéristiques, aspects et avantages de l'invention apparaîtront encore plus clairement à la lecture de la description qui va suivre, et des exemples concrets, mais non limitatifs, relatifs à sa mise en oeuvre.

Les organopolysilazanes de départ susceptibles d'être réticulés selon un procédé conforme à l'invention, sont des produits bien connus en soi et aisés à préparer ; on peut utiliser notamment n'importe quel produit de réaction entre : (a) au moins un organohalogénosilane de formule (I):

$R_aX_{4-a}Si$ (I)

dans laquelle X désigne un halogène et les radicaux R, identiques ou différents, sont choisis parmi l'hydrogène, un radical alkyle linéaire ou ramifié éventuellement halogéné, un radical cycloalkyle, un radical aryle tel que le radical phényle et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohexyle et cycloheptyle ; R arylalkyle : les radicaux benzyle, phényléthyle ; R alkylaryle : les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCl_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2 = CH)SiCl_2$

$(CH_3)_2 (CH_2 = CH) SiCl$, $(C_6H_5)_2 (CH_2 = CH)SiCl$

$(C_6H_5)(CH_2 = CH) SiCl_2$, $CH_3(C_6H_5)(CH_2 = CH) SiCl$.

Comme exemple de composés comportant au moins un groupement $NH_2$ ou NH et utilisables pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'ani line, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les organopolysilazanes obtenus en fin de réaction englobent plus spécifiquement :

1 - les polymères linéaires répondant aux formules :

$H_2N (R_2SiNH)_p SiR_2 NH_2$ (II)

et

$R_3SiNH(R_2SiNH)_{p'} SiR_3$ (III)

dans lesquelles R a la signification donnée pour la formule (I) ; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$(R_2SiNH)_n$ (IV)

dans laquelle n est compris entre 3 et 10, généralement n = 3,4 et R a la signification donnée pour la formule (I) ci-dessus. Ils sont décrits notamment dans le brevet britannique GB-A.881.178.

3 - les polymères résineux formés de motifs choisis parmi ceux de formule $R_3SiNH_{0,5}$, $R_2$ SiNH, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Les organopoly(disilyl)silazanes de départ susceptibles d'être réticulés selon un procédé conforme à l'invention, sont également des produits bien connus en soi et aisés à préparer. Ils peuvent être notamment préparés par action : (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc..., sur (b) au moins un organohalogénodisilane de formule :

$R_bX_{3-b}Si\ Si\ R_cX_{3-c}$ (V)

dans laquelle les radicaux R identiques ou différents ont la même signification que ci-dessus et b est égal à

0,1, 2 ou 3 et c est égal à 0, 1 ou 2, et X est un halogène, généralement le chlore.

Comme exemple de composés de formule (V) on peut citer :

$(CH_3)_2$ ClSiSi $(CH_3)_2$ Cl, $(CH_3)_2$Cl SiSi $CH_3$ $Cl_2$

$CH_3$ $Cl_2$ SiSi $CH_3$ $Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

Enfin, comme décrit dans le brevet EP-A 75826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitements catalytiques bien connus destinés à provoquer, suivant la nature de l'aminolysat, une polymérisation et/ou une copolymérisation et/ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-77/160446, US-A-3.007.886, US-A-3.187.030 et FR-A-2.577.933.

Il est également possible d'utiliser à titre de polysilazanes de départ des copolymères silanes-silazanes obtenus par polycondensation, en milieu solvant et en présence d'un métal alcalin, notamment le sodium, entre des silanes chlorés et des disilazanes chlorés, comme décrit dans la demande de brevet français déposée sous le n° 87 08091, ou bien encore des polycarbosilazanes obtenus par thermolyse, de préférence opérée sous atmosphère inerte et à une température comprise entre 250°C et 550°C, des copolymères ci-dessus.

De préférence, on opérera sur des polysilazanes de départ présentant par molécule au moins un groupement ≡ Si-NH-.

Les composés de formule

$X - \overset{\overset{O}{||}}{C} - X$ et ceux comprenant au moins deux groupements fonctionnels de formule

$X - \overset{\overset{O}{||}}{C} -$ qui peuvent être utilisés pour la réticulation de polysilazanes tels que notamment définis ci-dessus, sont également des produits bien connus dans l'état de l'art puisque rentrant dans la classe générale respectivement des oxyhalogénures de carbone et des polyhalogénures d'acides. Tous ces composés (oxyhalogénures et polyhalogénures) seront dénommés dans la suite, par commodité, composés réticulants.

L'oxyhalogénure de carbone préféré est l'oxychlorure de carbone, connu aussi sous le nom de phosgène.

Les polyhalogénures d'acides préférés sont les polychlorures d'acides. Ces derniers produits sont classiquement obtenus en faisant réagir par exemple le pentachlorure ou le trichlorure de phosphore sur les acides polycarboxyliques correspondants.

Plus le composé réticulant comprendra de groupements fonctionnels du type chlorure d'acide, et plus la composition polysilazane obtenue en fin de réaction sera réticulée, étant par ailleurs entendu, comme déjà indiqué, que ledit composé réticulant doit contenir à l'origine au moins deux groupements fonctionnels du type chlorure d'acide.

Sans vouloir limiter l'invention à une quelconque théorie, il est probable que les mécanismes de réticulation mis en jeu lors de la mise en contact polysilazane / composé réticulant soient les suivants (dans l'équation donnée ci-dessous, ≡ Si-NR-Si ≡ symbolyse le polysilazane de départ, et ClOC$\sim\sim\sim$COCl le composé présentant au moins deux groupements fonctionnels chlorure d'acide, ce composé pouvant donc être le phosgène ) :

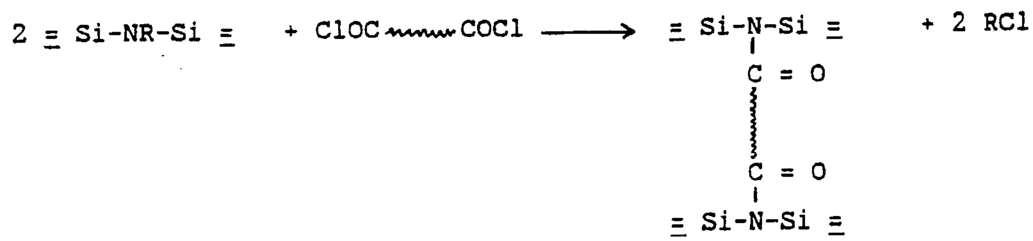

Le pontage entre les molécules de polysilazane est donc ainsi assuré par le composé réticulant au travers de ces divers groupements fonctionnels chlorure d'acide.

Parmi les polychlorures d'acides susceptibles d'être utilisés dans un procédé de réticulation conforme à l'invention, on peut citer, à titre purement d'exemples, les polychlorures :

- d'acides aliphatiques dicarboxyliques, tels que :
. l'acide oxalique
. l'acide malonique
. l'acide succinique
. l'acide glutarique
. l'acide adipique
. l'acide diméthyl-2,4 adipique
. l'acide pimélique
. l'acide subérique
. l'acide azélaïque
. l'acide sébacique
. l'acide dodécanedioïque
. l'acide fumarique
. l'acide maléique
. l'acide méthyliminodiacétique
. l'acide diméthylamino-3 hexanedioïque
- d'acides cycloalcanes dicarboxyliques, tels que :
. l'acide cyclohexane dicarboxylique-1,4
. l'acide diméthylamino-3 cyclopentane dicarboxylique-1,2
- de diacides aromatiques, tels que :
. l'acide phtalique
. l'acide isophtalique
. l'acide téréphtalique
. l'acide phénylènediacétique
. l'acide naphtalènedicarboxylique-1,5
. l'acide naphtalènedicarboxylique-1,6
. l'acide diphényldicarboxylique-4,4′
. l'acide diphényldicarboxylique-3,3′
. l'oxyde de bis(hydroxycarbonyl-4)phényle
. l'oxyde de bis(hydroxycarbonyl-3)phényle
. la dihydroxycarbonyl-4,4′ diphénylsulfone
. la dihydroxycarbonyl-3,3′ diphénylsulfone
- d'acides pyrimidines ou imidazoles dicarboxyliques.
- d'acides hydroxypolycarboxyliques, et plus particulièrement les acides hydroxydi- ou hydroxytricarboxyliques, comme par exemple l'acide malique, l'acide citrique et l'acide tartronique
- d'acides poly(hydroxycarboxyliques), comme par exemple l'acide tartrique
- d'aminoacides dicarboxyliques et leurs amides correspondantes, comme par exemple l'acide aspartique, l'asparagine, l'acide glutamique et la glutamine.

Les dichlorures d'acides aliphatiques dicarboxyliques, et notamment ceux dont la longueur de la chaîne principale hydrocarbonée n'excède pas 10 atomes de carbone, et de préférence 5 atomes de carbone, conviennent particulièrement bien comme agents de réticulation.

La mise en contact entre le polysilazane de départ et le composé réticulant peut se faire selon tout moyen connu en soi.

Le composé réticulant peut se présenter sous la forme d'un liquide ou d'un gaz.

Par ailleurs, par quantité efficace d'un composé réticulant tel que notamment défini ci-dessus, on entend une quantité suffisante pour réticuler convenablement le polysilazane et lui assurer ainsi un caractère substantiellement infusible et insoluble dans la plupart des solvants organiques usuels (pentane, hexane, toluène, benzène...).

La température à laquelle est menée le traitement, et la durée de ce dernier, peuvent varier dans une large mesure et dépendent de la nature du polysilazane à durcir, ainsi que de la quantité de composé réticulant mise en jeu. D'une manière générale, la durée est liée à la température du traitement : plus cette température est élevée et plus la durée du traitement peut être raccourcie, l'important étant d'aboutir dans tous les cas en fin de traitement à un état substantiellement infusible et insoluble.

D'une manière pratique, cette température est généralement comprise entre l'ambiante et la température de ramollissement du polysilazane à durcir ; elle est de préférence comprise entre 50 °C et une température légèrement inférieure à celle correspondant au point de ramollissement du polysilazane à durcir.

La durée du traitement n'étant pas critique, elle peut varier de quelques minutes à plusieurs heures, selon les températures mises en jeu.

Selon une première variante, préférée, de mise en oeuvre du procédé de réticulation selon l'invention, et convenant plus particulièrement pour la préparation ultérieure de fibres ou de couches minces réticulées, le polysilazane de départ est tout d'abord mis à la forme d'article désirée puis mis en contact avec le composé réticulant destiné à l'imprégner : le composé réticulant peut alors se présenter sous la forme d'un liquide ou d'un gaz, mais de préférence sous la forme d'un gaz.

Dans ce dernier cas, le composé réticulant peut être utilisé pur, ou bien encore dilué dans un gaz inerte, tel qu'un gaz d'argon (ou tout autre gaz rare) ou d'azote par exemple.

Dans ce cas toujours, on opère généralement à pression atmosphérique, bien que des pressions inférieures ou supérieures ne soient bien évidemment pas exclues ; en outre la mise en contact entre le polysilazane et le composé réticulant peut être statique ou dynamique, c'est à dire réalisée sous balayage.

Selon une seconde variante de mise en oeuvre du procédé de réticulation selon l'invention, l'adjonction du composé réticulant au polysilazane de départ peut se faire par mélange direct, en masse ou en milieu solvant organique, des deux composés.

Cette seconde variante n'offre un intérêt réel que dans la mesure où, bien entendu, le composé réticulant utilisé est, à température ambiante, substantiellement inactif vis à vis du polysilazane de départ, c'est à dire que sa mise en contact avec le polysilazane n'engendre chez ce dernier que peu ou pas de transformations physicochimiques notables, notamment au niveau de son point de fusion ou de ramollissement. Le caractère substantiellement stable de la composition ainsi obtenue permet alors de ne pas perturber la mise en forme ultérieure du polysilazane, notamment lors d'une extrusion; plus précisement, les compositions ainsi obtenues peuvent ensuite être mises en forme selon les configurations les plus diverses telles que filaments, fibres, pellicules, revêtements de support, articles moulés ou autres, puis réticulées, la réticulation étant alors initiée par chauffage, notamment à la sortie d'une filière d'extrusion. Comme déjà indiqué, de telles compositions se prêtent alors avantageusement à la mise sous forme de fibres pour l'obtention, après réticulation et pyrolyse, de fibres céramiques. Elles peuvent en outre servir de matrice pour des fibres céramiques réalisées notamment en SiC, $SiO_2$, $Si_3N_4$, $B_4C$, etc... Plus simplement encore, elles peuvent aussi être utilisées à la préparation de poudres céramiques.

Il va bien entendu de soi que les polysilazanes de départ destinés à être réticulés peuvent par ailleurs contenir des charges, de préférence choisies parmi $SiO_2$, $Si_3N_4$, SiC, BN, $B_2O_3$, $B_4C$, AlN, $Al_2O_3$, $Al_4C_3$, TiN, $TiO_2$, $ZrO_2$, ZrC, $VO_2$, etc...En outre, si besoin est pour une application donnée, leur viscosité peut être ajustée classiquement par ajout d'un solvant organique compatible avec le polysilazane considéré, comme par exemple du benzène, du toluène, de l'hexane, du cyclohexane, de l'éther isopropylique, de l'éther éthylique, du dichlorométhane ou du chlorobenzène.

A l'issue du traitement de réticulation selon l'invention, on récupère un polysilazane, éventuellement mis en forme, infusible et insoluble dans la plupart des solvants organiques usuels, notamment dans l'hexane.

Les polysilazanes ainsi durcis peuvent alors subir, de manière classique et connue, des traitements thermiques (pyrolyses) destinés à les transformer en des céramiques à base de SiC, $Si_3N_4$ ou leurs mélanges.

Plus particulièrement, les supports recouverts ou imprégnés du polysilazane durci, ou les fibres en polysilazane durci, peuvent subir immédiatement ou ultérieurement une pyrolyse menée sous vide ou sous pression ou sous atmosphère inerte ou réactive (par exemple $HN_3$) jusqu'à obtenir une céramisation totale.

Des exemples concrets, mais non limitatifs, illustrant l'invention dans ses divers aspects, vont maintenant être donnés.

EXEMPLE 1

Un polysilazane de départ est tout d'abord préparé de la manière suivante :
dans un réacteur de trois litres double enveloppe muni d'une agitation mécanique, d'un tube d'entrée des gaz et d'un condenseur, on effectue une coammonolyse, en présence de 1,1 litre d'éther isopropylique, d'un mélange de $CH_3SiCl_3$ (0,85 mole) et de $(CH_3)_2SiCl_2$ (0,59 mole). Ce mélange dans l'éther isopropylique est refroidi à 3° C et est maintenu à cette température pendant l'introduction de $NH_3$ gazeux. Le débit d'introduction de $NH_3$ est d'environ 6 ml/s et l'addition a lieu en 6 heures. En fin d'essai, on filtre le chlorure d'ammonium formé sur verre fritté (diamètre moyen des pores : 10 µm) et on récupère une solution limpide de polysilazane. Cette solution est ensuite concentrée puis traitée avec de l'acide triflique selon des modalités pratiques définies dans la demande de brevet français 2 577 933.

Cette solution est ensuite évaporée (élimination du solvant). On récupère ainsi un polysilazane dont la température de ramollissement est de 130° C (mesurée au banc KOFFLER).

Ce polysilazane est ensuite filé par extrusion sous forme de fibres (diamètre moyen : 13 µ) puis est traité à 45° C par un courant d'azote gazeux chargé en dichlorure d'acide oxalique, la quantité totale de dichlorure d'acide mise en jeu durant oe traitement étant fixée à 3 % en poids par rapport au polysilazane.

Dans un deuxième temps, on note l'évolution de la température de ramollissement (Tr) du polysilazane ainsi traité,au cours d'un cycle de montée en température tel que ci-dessous :
2H00 à 70° C : Tr = 170° C
suivi de 2H00 à 100° C : Tr = 230° C
suivi de 2H00 à 100° C : Tr = 260° C

Le produit issu de la dernière étape est infusible (Tr ≧ 260° C), et insoluble, notamment dans l'hexane. La teneur en oxygène dosée sur la fibre réticulée est de 6,4 % en poids.

Exemple 2

On reprend l'exemple 1 en mettant en jeu cette fois 2,5 % en poids de dichlorure d'acide oxalique.

L'évolution de la température de ramollissement du polysilazane ainsi traité),au cours du cycle de montée en température ci-dessous , est alors la suivante :
4 HOO à 45° C : Tr = 160° C
suivi de 24 H 00 à 85° C : Tr = 260° C.

Le produit issu de la dernière étape est infusible (Tr ≧ 260° C), et insoluble, notamment dans l'hexane. La teneur en oxygène dosée sur la fibre réticulée est de 5,2 % en poids.

Exemple 3

On reprend l'exemple 1 en mettant en jeu cette fois 2,0 % en poids de dichlorure d'acide oxalique, la température du traitement étant de 60° C.

L'évolution de la température de ramollissement du polysilazane ainsi traité),au cours du cycle de montée en température ci-dessous, est la suivante :
2 H 00 à 60° C : Tr = 170° C
8 H 00 à 100° C : Tr = 260° C

Le produit issu de la dernière étape du traitement est infusible (TR ≧ 260° C), et insoluble, notamment dans l'hexane. La teneur en oxygène dosée sur la fibre réticulée est de 4,3 % en poids.

**Revendications**

1/ Procédé de réticulation d'un polysilazane, caractérisé par le fait qu'il consiste à mettre en contact ledit polysilazane avec une quantité efficace d'au moins un composé choisi parmi (i) les composés de formule

$X-\overset{O}{\overset{\|}{C}}-X$ et (ii) les composés comprenant au moins deux groupements fonctionnels de formule

$X-\overset{O}{\overset{\|}{C}}-$, formules dans lesquelles X représente un halogène.

2/ Procédé selon la revendication 1, caractérisé en ce que ledit polysilazane comporte par molécule au

moins un groupement ≡ Si-NH-.

3/ Procédé selon l'une quelconque des revendications précédentes caractérisé en ce que X est le chlore.

4/ Procédé selon la revendication 3 caractérisé en ce que l'on utilise un dichlorure d'acide dicarboxylique.

5/ Procédé selon l'une quelconque des revendications précédentes caractérisé en ce que ladite mise en contact se fait à une température comprise entre la température ambiante et la température de ramollissement du polysilazane.

6/ Procédé selon la revendication 5 caractérisé en ce que ladite température est comprise entre 50 °C et une température légèrement inférieure à la température de ramollissement du polysilazane.

7/ Procédé selon l'une quelconque des revendications précédentes caractérisé en ce que ledit composé est sous forme gazeuse.

8/ Procédé selon l'une quelconque des revendications précédentes caractérisé en ce que, avant ladite mise en contact, l'on met ledit polysilazane à une forme d'article désirée, telle que notamment fibre ou couche mince.

9/ Procédé selon l'une quelconque des revendications 1 à 7 caractérisé en ce que ladite mise en contact se fait par mélange direct, en masse ou en milieu solvant organique, dudit polysilazane et dudit composé.

10/Procédé de préparation d'un produit céramique à base de SiC et/ou $Si_3N_4$ caractérisé par le fait qu'il consiste à pyrolyser un polysilazane réticulé selon un procédé conforme à l'une quelconque des revendications 1 à 9.

Office européen des brevets

# RAPPORT DE RECHERCHE EUROPEENNE

Numero de la demande

EP 89 40 3576

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 482 669 (D. SEYFERTH)<br>* Revendications 1,15,33; colonne 5, lignes 53-57,60-61; colonne 6, lignes 2-3 * | 1 | C 08 G 77/62<br>C 08 J 3/24<br>C 04 B 35/00 |
| A | EP-A-0 245 047 (CELANESE)<br>* Revendications 1,2 * | 1 | |
| A | FR-A-2 190 764 (BAYER)<br>* Revendications 1-5; page 6, lignes 5-25 * | 1 | |
| | | | DOMAINES TECHNIQUES RECHERCHES (Int. Cl.5) |
| | | | C 08 G<br>C 08 J<br>C 04 B<br>C 08 L |

Le présent rapport a été établi pour toutes les revendications

| Lieu de la recherche | Date d'achèvement de la recherche | Examinateur |
|---|---|---|
| LA HAYE | 09-05-1990 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant